# EUROPEAN PATENT SPECIFICATION

(11) **EP 3 611 010 B1**
(45) Date of publication and mention of the grant of the patent: **02.09.2026**
(21) Application number: 19189284.3
(22) Date of filing: 31.07.2019
(51) Int. Cl.: B29C 65/34, B64C 1/12, B29K 101/12, B29K 105/06, B29L 31/30

(54) **WELDED BOND, DEVICE, AND METHOD FOR RESISTANCE WELDING OF THERMOPLASTIC COMPONENTS, IN PARTICULAR FOR THE PRODUCTION OF AIRCRAFT, AND AIRCRAFT**
SCHWEISSVERBINDUNG, VORRICHTUNG UND VERFAHREN ZUM WIDERSTANDSSCHWEISSEN VON THERMOPLASTISCHEN KOMPONENTEN, INSBESONDERE ZUR HERSTELLUNG VON FLUGZEUGEN, UND FLUGZEUG
JOINT DE SOUDAGE, DISPOSITIF ET PROCÉDÉ DE SOUDAGE PAR RÉSISTANCE DE COMPOSANTS THERMOPLASTIQUES, EN PARTICULIER POUR LA PRODUCTION D'AÉRONEFS ET AÉRONEF

(30) Priority: 16.08.2018 DE 102018119990; 16.08.2018 DE 102018119991
(43) Date of publication of application: 19.02.2020
(73) Proprietor: Airbus Operations GmbH, 21129 Hamburg (DE)
(72) Inventor: Tiryaki, Memis, 21129 Hamburg (DE); Eilken, Wolfgang, 21129 Hamburg (DE); Bahrani, Amine, 21129 Hamburg (DE)
(74) Representative: KASTEL Patentanwälte PartG mbB

(56) References cited:
- EP-A2- 0 924 054
- WO-A1-01/19937
- FR-A1- 2 620 648
- JP-A- S5 150 374
- US-A- 3 346 442
- US-A- 5 313 034
- US-A- 5 643 390
- US-A1- 2009 032 184

## Description

The invention relates to a welded bond of thermoplastic components, comprising a heating element for resistance welding of thermoplastic components, in particular for the production of an aircraft. Furthermore, the invention relates to a system and a method for bonding thermoplastic components by resistance welding, in particular for the production of an aircraft, and also an aircraft.

Components made of composite materials and/or fibre composite materials are increasingly being used for the construction of modern airplanes and/or aircraft. The individual components are connected to one another, for example, by riveting, adhesive bonding, screws, or welding.

The fuselage of an aircraft usually consists of a fixed frame made of reinforcing elements, which support a skin made of a composite material. Stringers and frames are used as the reinforcing elements, wherein the stringers extend in the longitudinal direction of the fuselage and the frames extend in the circumferential direction of the fuselage. During the production of an airplane fuselage, individual fuselage segments are usually manufactured separately from one another and subsequently joined together to form the entire fuselage.

The overlapping skin sections of the various segments are frequently connected using rivets. However, the rivet connections are punctiform and can therefore cause tension concentrations. Rivet connections are complex to produce.

In the case of adhesive bonding, the adhesive surfaces have to be complexly prepared and a high time expenditure is required for the curing of the adhesive used. In the case of the connection of the components by screws, boreholes are required, whereby disadvantages can result in the structure of the respective component.

Document DE 10 2015 110 193 A1 describes a method for the weld bonding of two components made of thermoplastic composite material having multiple layers.

Document DE 10 2007 003 357 A1 describes the bonding of a thermoplastic material to a fibre composite material by movement welding or induction welding. For induction welding, an electrically conductive material is arranged in a bonding region between the thermoplastic material and the fibre composite material.

Document EP 3 040 265 A1 describes a method for connecting two fuselage sections. A connecting frame is used in this case.

Document EP 0 924 054 A2 discloses a welding element for thermoplastic parts which comprises a carrier material that contains at least one resistance wire. The welding element consists of a fibre material such as fabric in which a number of metal wires are accomodated. The fibre material and the metal wires are incorporated in a thermoplastic matrix material. To generate heat, an electric current is applied to connections of the welding elements.

US 2009/0032184 A1 discloses an apparatus for resistance welding of thermoplastics, wherein a heating element is placed between overlapping side edges of articles containing thermoplastic material to define a weld area between the overlapping side edges with the heating element extending outwardly. Electrodes in contact with the exposed sides of the heating element move relative thereto while applying a current to the electrodes to create a moving localized zone. Pressure is applied to the melt zone immediatly following the creation of the zone to fuse the articles to each other and to the heating element.

Document US 5,313,034 A shows thermoplastic welding for obtaining long, continuous thermoplastic welds on large structures. A current conducting strip is placed in the bond line between the surfaces of the substrates that are to be bonded. Tabs are provided for connecting the current conducting strip to an electrical potential. The current conducting strip is composed of continuous unidirectional current conducting fibres such as carbonized PAN fibres.

US 5,643,390 A discloses a bonding technique for high performance thermoplastic compositions, wherein a heating element is sandwiched between the parts to be joined. The heating element can consist of a single ply of unidirectional carbon fibres prepreg with the same matrix as that of the interface being bonded. Document US 3,346,442 A describes a method for the production of a honeycomb panel. A thermosetting adhesive film or bonding member has electrically conducting heating elements such as granular carbon or resistance wires embedded therein. The embedded heating elements produce heat when an electric current is passed therehrough.

Document FR 2 620 648 A1 discloses a heating element in which resistive elements are incorporated. Parallel wires of fibres which can be made of carbon are oriented in parallel.

The document JP S51 50374 A shows a heating element.

Document WO 01/19937 A1 shows a hot melt adhesive element containing one or more melt components in which a heating element made of an electrically conducting material is embedded. The hot melt adhesive element bonds components together using an adhesive layer.

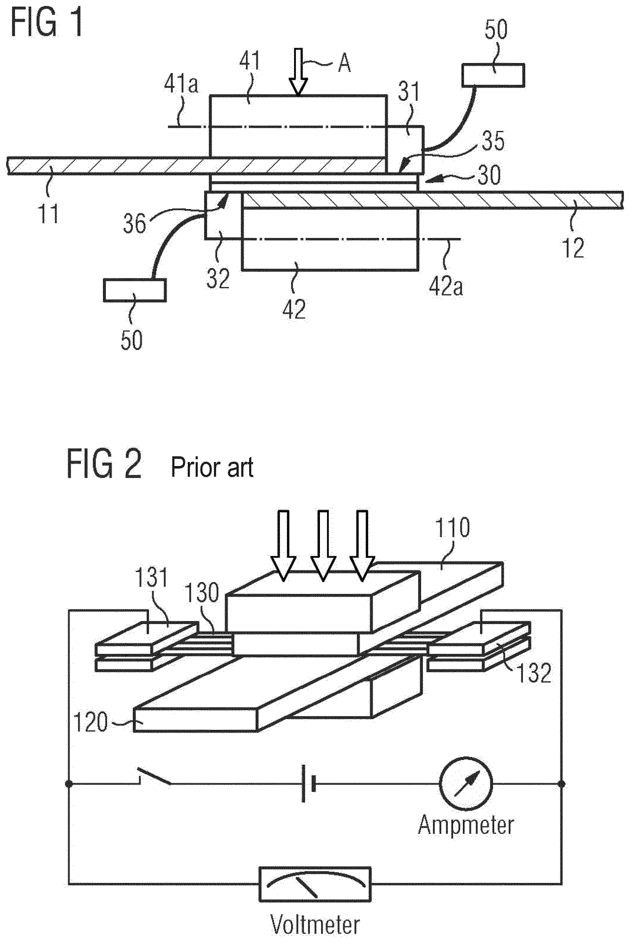

**Figure 2** shows a known method for bonding components by way of resistance welding. A first component 110 and a second component 120 are bonded to one another in this case. For this purpose, a heating element 130, which is electrically conductive, is arranged between the components 110, 120 along the welding section in order to generate heat in the bonding region. The heating element 130 is connected for this purpose on both sides to electrical connection clamps 131, 132, which are connected to a voltage source to generate a current flow through the heating element 130. The voltage applied to the heating element 130 and the current are measured.

In the case of the bonding of individual fuselage segments of airplanes, the welded bonds have to withstand very large loads. In particular in the case of fuselage lengths, which can be, for example, in the range of 24 m, a correspondingly long and very strong bond of the fuselage segments has to be produced.

In addition, the further problem exists in the bonding of the individual fuselage segments by means of resistance welding that welded bonds have to be produced over great lengths. In the case of fuselage lengths, which can be, for example, in the range of 24 m, a correspondingly long welded bond of the overlapping skin sections of the fuselage segments to be bonded to one another has to be produced. However, current losses can occur during the resistance welding over great lengths, which result in an inefficient heating procedure. Moreover, uneven or flawed welded bonds can result. In addition, a high power consumption is necessary for welding over long distances.

The invention has the objective to provide a welded bond of thermoplastic components by resistance welding over great lengths with increased strength, for example, as required in the production of aircraft and in particular in the welding of fuselage segments. In particular, fuselage segments of commercial aircraft are to be able to be welded, wherein a high quality and strength of the bond is ensured.

To achieve this objective, the invention provides according to a first aspect a welded bond of thermoplastic components, in particular for the production of aircraft, wherein the welded bond comprises a heating element, the heating element comprising one or more electrically conductive elements, which heat up upon application of an electric voltage to the heating element, to weld a first component to a second component in a region electrically heated by the heating element, wherein the heating element remains between the welded components after the welding procedure, and wherein the electrically conductive elements are designed as wires or fibres, which extend parallel to one another between contact regions for electrically contacting the heating element, wherein the parallel electrically conductive elements are oriented perpendicular to the direction of the weld seam produced by the welding, and are used as a structural reinforcement to enhance the strength of the welded bond in the direction of the main load acting on the components after being welded to one another.

Large components can also be bonded with high strength and low time expenditure by the multifunctional heating element for resistance welding. In particular, in the production of aircraft, large fuselage segments can also be bonded to one another to produce a fuselage, which has an increased strength on the connecting seams.

The electrically conductive elements in the heating element are preferably aligned in the direction of the main load which acts on the components welded to one another, in particular in the installed state of the welded components. In particular, the main load can be a traction force which pulls apart the welded components in the installed state.

The electrically conductive elements or fibres are aligned, for example, in the load direction of the welded bond to be produced.

In particular, the heating element and/or its conductive fibres are used as a reinforcing element of the components welded to one another after the welding procedure.

The electrically conductive elements extend electrically insulated from one another between the contact regions of the heating element.

The orientation of the conductive elements is oriented perpendicularly to the direction X of the weld seam to be produced.

For example, the heating element comprises at least one contact surface for contacting an electrode movable in relation to the heating element.

A delimited partial region of the heating element is preferably heatable by current flow, the position of which in the heating element is changeable during the welding procedure.

In particular, regions of the heating element located outside the delimited partial region do not thereby heat up due to current flow in the conductive elements arranged there.

The heating element is used in particular to weld a first component, which comprises thermoplastic material, to a second component, which comprises thermoplastic material, in a region electrically heated by the heating element.

The electrically conductive elements are advantageously formed as carbon fibres.

The electrically conductive elements advantageously extend beyond the heating element and form a contact element for the power supply there.

In particular, the components are elements of a fuselage of an aircraft, which are to be bonded along a weld seam, wherein the main load is oriented, for example, perpendicularly to the direction X of the weld seam. This can be the case, for example, in an airplane fuselage longitudinal seam.

A multifunctional heating element is provided by the invention, which is used for heating the welding zone during resistance welding, on the one hand, and forms a structural-mechanical reinforcement of the components welded to one another, on the other hand. In particular, the orientation of the fibres of the heating element in the direction of the main stress or main load enables an increased load transmission capability.

According to a second aspect of the invention, a system for bonding thermoplastic components by resistance welding is provided, which is suitable in particular for the production of aircraft, wherein the system comprises a unit for displacing an electrically heated region of the components in a welding direction W along the components, and a heating element configured to provide a welded bond according to the first aspect of the invention.

Welded bonds of thermoplastic components are thus enabled in particular over great lengths with high quality, for example, as is required in the production of aircraft, wherein additionally the power consumption is reduced and the time expenditure is decreased. For example, entire fuselage segments can be bonded in the longitudinal direction by welding, wherein a high quality and strength of the bond is ensured, the power consumption is reduced, and the time expenditure is decreased.

The electrically heated region of the components is advantageously heated by a partial region of the heating element, wherein the position of the partial region in the heating element changes during the welding procedure. In particular, the position is continuously changed in this case. In particular, the unit for displacing the electrically heated region during the welding procedure supplies different partial regions of the heating element with current in succession, to effectuate the progress or continuous progress of the heated region.

The unit for displacing the electrically heated region preferably comprises one or more contact elements, which are movable in relation to the heating element to electrically contact the heating element at different points in succession.

The heating element can thus be contacted and/or supplied with current continuously at different regions or points in succession during the welding procedure.

In particular, the contact elements are in contact during the movement thereof with the heating element and are used for the power supply of the heating element. They are designed, for example, as electrodes.

The contact elements are advantageously designed as rollers or roller electrodes, which roll on the heating element during the welding procedure to supply various partial regions of the heating element continuously with power in succession.

The electrically conductive elements of the heating element advantageously extend parallel to the axis of rotation of the roller electrodes. Only a locally delimited, progressing welding point within the entire bonding region, at which the components rest on one another or overlap, is thus heated during the welding procedure.

For example, the system comprises one or more contact pressure elements to press the first component and the second component against one another in a contact pressure region during the welding procedure, wherein the contact pressure region is movable synchronously with the electrically heated region. The components can thus be pressed against one another in a targeted manner in the respective heated region to weld them to one another in this manner.

In particular, the first and/or the second contact pressure element is designed as a movable contact pressure roller, or it can comprise one or more contact pressure rollers.

In particular, the system for resistance welding of thermoplastic components has a contact pressure unit to press the thermoplastic components against one another during the welding.

The system advantageously comprises at least one movable electrode, which moves over the contact surface of the heating element during the welding procedure to supply various partial regions of the heating element continuously with current in succession. In particular, the movable electrode is designed as a roller in this case, which rolls during the welding procedure on a contact surface of the heating element.

In particular, a system for bonding thermoplastic components by resistance welding is provided, which is suitable for the production of aircraft and comprises a heating element according to the invention.

In particular, a system for bonding thermoplastic components by resistance welding is specified, which is suitable in particular for the production of aircraft, comprising: an electrically conductive heating element to weld a first component, which comprises thermoplastic material, to a second component, which comprises thermoplastic material, in an electrically heated region of the components, and a unit for continuously displacing the electrically heated region of the components in a welding direction W along the components.

According to another aspect of the invention, a method for bonding thermoplastic components by resistance welding is provided, which is suitable in particular for the production of aircraft, in which a first component is welded to a second component on an electrically heated region of the components, wherein electrically conductive elements of a heating element are embodied as wires or fibres which extend parallel to one another and electrically insulated from one another between contact regions for electrically contacting the heating element, and the heating element remains between the welded components after the welding procedure, wherein the parallel electrically conductive elements are oriented perpendicular to the direction X of the weld seam to be produced, and are aligned in the direction of the main load which acts on the components welded to one another, wherein the parallel electrically conductive elements are used for structural reinforcement of the component produced by welding to enhance the strength of the welded bond.

The electrically heated region of the components is preferably moved during the welding procedure in a welding direction W in relation to the components.

Different partial regions of the heating element are advantageously supplied in succession with current during the welding procedure to effectuate the movement of the electrically heated region, which is also referred to as the welding zone, in relation to the components.

An electrode is advantageously moved in the welding direction W and continuously supplies various partial regions of the heating element with current in succession, in which the electrically conductive elements extend electrically insulated from one another, for example, and extend perpendicularly to the welding direction W.

For example, during the welding procedure, one or more contact elements or electrodes for the current supply of the heating element are moved in relation to the heating element to contact the heating element at different points in succession.

The contact elements are preferably continuously in electrical contact with the heating element during the movement thereof.

The first component and the second component are advantageously pressed against one another in a contact pressure region during the welding procedure, wherein in particular the contact pressure region is moved in relation to the components synchronously with the electrically heated region.

One or more contact pressure rollers are preferably moved over the components to be welded in order to press the components against one another during the welding procedure in the region of the welding zone.

In addition, the system described here is used for bonding parts, in particular of fuselage segments of an aircraft.

In particular, the method is carried out using a heating element according to the invention and/or using the system according to the invention.

In addition, a method for bonding thermoplastic components by resistance welding is described, which is suitable in particular for producing aircraft, in which a first component, which comprises thermoplastic material, is welded to a second component, which comprises thermoplastic material, on an electrically heated region of the components, wherein the electrically heated region of the components is moved during the welding procedure in a welding direction W in relation to the components.

Further, a method for bonding thermoplastic components by resistance welding is described, in particular for the production of aircraft, in which a first component, which comprises thermoplastic material, is welded to a second component, which comprises thermoplastic material, on an electrically heated region of the components, wherein the heating element remains between the welded components after the welding procedure and forms a reinforcement or a reinforcing element there to enhance the strength of the welded bond of the components welded to one another.

According to another aspect, the invention provides an aircraft, which has components which are provided with the welded bond according to the invention, and/or are welded using the system according to the invention, and/or are produced using the method according to the invention.

Furthermore, an aircraft is provided, which is produced using the above-described system and/or using the above-described method.

In particular, the fuselage of an airplane is produced in this manner.

It is possible in particular by way of the invention, during the production of airplanes, to bond fuselage segments rapidly and reliably to one another in order to produce the fuselage. In addition, the power consumption and the current consumption during the resistance welding are reduced. The power loss is minimized, since the heating takes place in particular continuously at the respective locally delimited welding region. Moreover, an improved tolerance management is enabled in particular for very long welded bonds. In particular, the welding procedure can be better controlled during the continuous resistance welding. In addition, production time is saved by the various advantages of the invention.

Advantages and details which are described in conjunction with the heating element according to the invention also apply to the device according to the invention and the method according to the invention, and also advantages and details which are described in conjunction with the device according to the invention or the method according to the invention also apply to the heating element according to the invention.

Exemplary embodiments of the invention will be explained in greater detail hereafter on the basis of the appended drawings. In the figures:
- Figure 1: schematically shows a sectional view of a preferred embodiment of a system according to the invention having the heating element according to the invention, during the production of an overlapping bond in the fuselage region of an airplane;
- Figure 2: shows a schematic view of a known device for resistance welding;
- Figures 3a and 3b: schematically show a top view of the preferred embodiment of the invention shown in Figure 1 during the production of a welded bond of two overlapping components;
- Figure 4: shows a cross section through a multifunctional heating element according to the invention;
- Figure 5: shows a flow chart which shows steps of the method according to the invention;
- Figure 6: shows a side view of a rear fuselage section of a commercial aircraft having longitudinal seams welded according to the invention;
- Figure 7: shows a sectional view of the fuselage section shown in Figure 6 having longitudinal seams welded according to the invention;
- Figure 8: shows a sectional view of a longitudinal seam welded according to the invention of a commercial aircraft.

**Figure 1** shows a sectional view of a system or a device for bonding thermoplastic components of aircraft by means of resistance welding according to one preferred embodiment of the invention. The device or the resistance welding system comprises an electrically conductive heating element 30, which is used to weld a first component 11 to a second component 12 in an electrically heated region of the components.

The components 11, 12 to be welded contain thermoplastic material and are arranged in an overlapping region on both sides of the heating element 30 for the resistance welding.

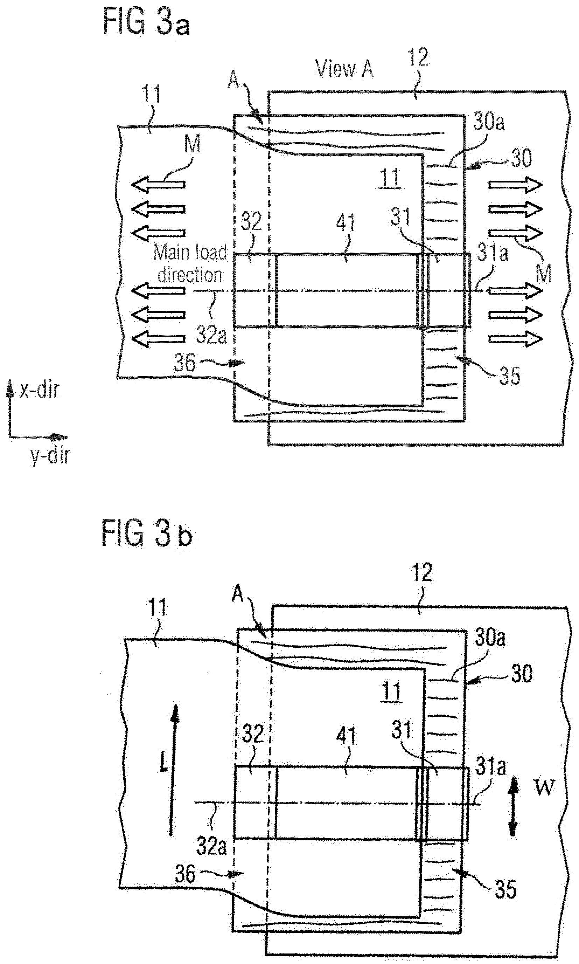

The heating element 30 comprises electrically conductive elements 30a, which are formed as wires and/or fibres, for heating the components 11, 12 upon application of an electric voltage (see also Figures 3a and 3b). The heating element 30 is designed so that it remains in the welded bond after the welding procedure and is used permanently therein as a reinforcing element of the components 11, 12 welded to one another.

The heating element 30 thus fulfils two functions. On the one hand, it is used as a heating element for resistance welding, on the other hand, with its electrically conductive elements 30a, it is used for the structural and/or structural-mechanical reinforcement of the component produced by welding. During the resistance welding, the thermoplastic material is melted, wherein at the bonding point, the thermoplastic material of the components 11, 12 encloses the wires or fibres 30a of the heating element 30 as a matrix, so that a fibre-reinforced bond results.

The electrically conductive fibres or wires 30a of the heating element 30 are aligned in the main load direction M of the welded bond to be produced (see Figure 3a). They are embodied as carbon fibres and/or are manufactured from carbon material.

The heating element 30 is located during the welding procedure between the two components 11, 12, in order to locally heat them by current flow in its electrically conducting elements or fibres 30a. The components 11, 12 to be bonded are in this example each a skin section of a fuselage segment and contain thermoplastic material. For the welding, they are arranged adjacent to one another, wherein they are located one on top of the other in an overlap region.

The heating element 30 is formed planar and extends between the two components 11, 12 to be bonded in a longitudinal direction L or in the X direction, which extends perpendicularly to the plane of the drawing in Figure 1. The electrically conductive elements 30a or fibres or wires heat up upon application of an electric voltage because of the current flow generated therein (see also Figures 3a and 3b).

Two contact elements in the form of movable electrodes 31, 32 are connected to a voltage source 50 and are used to apply the electric voltage to the heating element 30. The electrodes 31, 32 are designed as movable in relation to the heating element 30. The movement of the electrodes 31, 32 takes place perpendicularly to the plane of the drawing, i.e., in the longitudinal direction L of the heating element 30 (see Figure 3b).

The electrodes 31, 32 contact the planar heating element 30 in each case at a contact region 35 or 36, respectively, to generate the current flow between the two electrodes 31, 32 through the heating element 30. The contact regions 35, 36 are located at a left edge region and a right edge region of the heating element 30. The heating current runs exclusively between the opposing electrodes 31, 32 in the direction of the width of the heating element 30, i.e., from left to right or from right to left in Figure 1.

The two contact elements formed as movable electrodes 31, 32 form a unit in this manner, which is used to heat a locally delimited partial region of the heating element 30 during the welding procedure and continuously move or displace it along the components 11, 12, while the heating element 30 is located fixed in place between the components 11, 12 to be welded. The unit thus continuously displaces the heated region of the components 11, 12 during the welding procedure along the components 11, 12. The regions of the heating element 30 located outside the locally delimited, displaceable partial region are not supplied with current in this case.

The region or partial region heated by current flow in the electrically conductive elements 30a forms a welding zone, in which the two components 11, 12 are welded to one another by melting of the thermoplastic material and subsequent solidification with exertion of pressure.

The movable electrodes 31, 32 are designed as rollers. The rollers or roller electrodes 31, 32 are applied to the heating element 30 during the welding procedure, so that a part of the peripheral surface of each of them forms the contact with the heating element 30 while they roll on the respective contact surface of the heating element 30.

On the first side or the side located on top in Figure 1 of the heating element 30, it is electrically contacted by the first electrode 31 in the contact region 35 located on the right in Figure 1, which is a partial region or edge region of the heating element 30 and extends on the right edge of the heating element 30 on its top side in the longitudinal direction L of the heating element 30 (X direction), i.e., perpendicularly to the plane of the drawing in Figure 1 (see also Figures 3a and 3b).

On the second side or the side located on the bottom in Figure 1 of the heating element 30, it is electrically contacted by the second electrode 32 in a contact region 36 located on the left in Figure 1, which extends on the left edge of the heating element 30 on its bottom side in the longitudinal direction L of the heating element 30.

The contact points within the contact regions 35, 36 are formed by the respective peripheral surface of the roller-shaped electrodes 31, 32 applied to the heating element 30.

Due to the rolling of the roller-shaped electrodes 31, 32 on the heating element 30 at the contact regions 35 or 36, respectively, the current-conducting partial region of the heating element 30 between the two electrodes 31, 32 is moved in the longitudinal direction of the heating element 30, which extends perpendicularly to the plane of the drawing of Figure 1. The electrically heated welding zone, which is heated by the respective current-conducting, locally delimited partial region of the heating element 30, thus continuously progresses in the longitudinal direction (X direction). This movement corresponds to the welding movement W.

The two components 11, 12 to be bonded to one another are arranged on opposing sides of the heating element 30, i.e., on its top side or bottom side, respectively. The two components 11, 12 are formed by skin sections of a fuselage segment or various fuselage segments. In the present example, a top skin element forms the component 11, while a bottom skin element forms the component 12.

The two skin sections or components 11, 12 are pressed against one another during the welding procedure in the region of a contact pressure zone with the aid of two opposing contact pressure elements in the form of contact pressure rollers 41, 42. In the example shown here, the contact pressure element 41 arranged above the first component 11 exerts a force oriented downward in the direction of the welding zone on the first or top component 11, while the contact pressure element 42 arranged below the second component 12 exerts an opposing force oriented upward in the direction of the welding zone on the second or bottom component 12.

In operation, the two contact pressure elements or contact pressure rollers 41, 42 are moved synchronously with the progressing welding zone, so that the two components 11, 12 to be welded to one another are pressed against one another in the respective heated, current-conducting partial region of the heating element 30.

**Figures 3a and 3b** show the resistance welding system or the device having the heating element 30 according to the invention while a welding procedure is carried out in a view from above, which is identified in Figure 1 by the arrow A.

The top skin section 11 or the top component 11 overlaps the bottom skin section 12 or the bottom component 12 in an overlap region. The heating element 30 is located between the two skin sections 11, 12 and extends in the longitudinal direction L. The first contact pressure roller 41 is located on the top side of the first skin section or component 11.

The first or top roller-shaped electrode 31 is located on the right side, adjacent to the top or first contact pressure roller 41. This electrode is in electrical contact with the contact region 35 located underneath of the heating element 30 on its top side.

The bottom or second electrode 32 is located on the left side adjacent to the bottom or second contact pressure roller 42, which is not visible in Figures 3a and 3b. This electrode is in electrical contact with the contact region 36 located above it of the heating element 30 on its bottom side.

The two electrodes 31, 32 thus contact the heating element 30 on its top side or bottom side, respectively, each on a surface region of the heating element 30 located laterally to the contact pressure zone or the overlap region.

The two electrodes 31, 32 contact the heating element 30 on the two opposing contact regions 35, 36, respectively, on the respective edge of the heating element 30. The contact regions 35, 36 of the heating element 30 are located laterally adjacent to the overlap region of the components 11, 12. The width of the respective edge or contact region 35, 36 substantially corresponds to the width of the peripheral surface of the respective roller electrode 31 or 32.

The heating element 30 has a width which is greater than the width of the overlap region of the skin sections or components 11, 12. The contact regions 35, 36 for contacting by the electrodes 31, 32 are thus formed on both sides of the heating element 30.

To locally bound the heated welding zone in the longitudinal direction L or X direction, i.e., in the direction of the welding movement W, the electrically conductive elements 30a or wires of the heating element 30 extend essentially parallel to one another and electrically insulated from one another in the longitudinal direction L between the contact regions 35, 36 on the two sides of the heating element 30

The electrically conductive elements 30a extend parallel to the respective axis of rotation 31a, 32a of the roller electrodes 31, 32 and parallel to the axes of rotation 41a, 41b of the roller-shaped contact pressure elements 41, 42. The current flow between the two roller-shaped electrodes 31, 32 therefore extends through the heating element 30 substantially parallel to the respective axis of rotation 31a, 32a of the roller electrodes 31, 32 and also parallel to the axes of rotation 41a, 41b of the roller-shaped contact pressure elements 41, 42.

The overlapping fuselage bond of the two skin sections 11, 12 shown in Figures 3a and 3b extends in the X direction, which corresponds to the longitudinal direction of the airplane fuselage in the case of a longitudinal seam of the fuselage. The Y direction oriented perpendicular thereto corresponds to the peripheral direction of the fuselage and in this case is the direction of the main load or main load direction M, in which the greatest strain occurs on the seam between the fuselage segments.

The directions of the fibres 30a arranged in the heating element 30, which are manufactured from electrically conductive material and are provided as carbon fibres, can be selected in accordance with the respective load distribution.

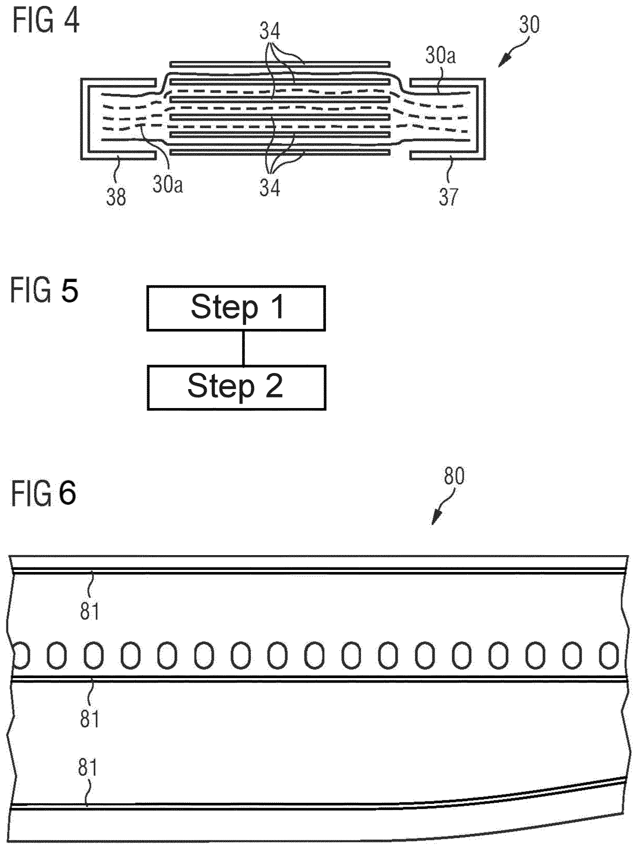

**Figure 4** shows a sectional view of the multifunctional heating element 30 according to one preferred embodiment, as part of the device according to the invention or the system according to the invention for resistance welding. Insulators 34 are arranged on its top side and bottom side, and between the electrically conductive fibres 30. An adhesive is used in this case which acts as an insulator. The electrically conductive fibres 30a extend in various directions in the heating element 30.

One electrically conductive terminal element 37, 38, into which the electrically conductive elements or fibres 30a extend at the respective ends thereof, is located at each of the two ends of the heating element 30 located on the right and left in the figure. The elements thus extend beyond the heating surface of the heating element 30, so that the two ends thereof are inserted into the terminal element 37 or 38, respectively, and fixed therein. The terminal elements 37, 38 are manufactured from metal and/or are metal parts, for example. During the welding procedure, they form the contact surfaces 35, 36, on which the electrodes 31, 32 move or on which the electrodes 31, 32 formed as rollers roll.

The bonding of two components 11, 12, which are skin sections of fuselage segments of an aircraft, according to the present invention is described hereafter by way of example on the basis of **Figures 1****,** **3a****,** **3b****, and** **5****.**

The first skin section 11 is arranged on the second skin section 12 so that the two skin sections overlap in a partial region. The planar heating element 30 is arranged between the two overlapping skin sections 11, 12. It comprises electrically conductive wires or fibres 30a, which are heated during the welding procedure to melt the thermoplastic material of the components 11, 12 in a welding zone, and it is additionally used after the welding procedure as a reinforcing element of the components 11, 12 welded to one another. The wires or fibres 30a of the heating element 30 are manufactured from carbon or are designed as carbon fibres. They are arranged for welding the components 11, 12 in such a way that they are aligned in the direction of the main load M, which acts on the welded bond of the components 11, 12 welded to one another in the installed state. (Step 1)

To form a welding zone which is locally delimited in a welding direction, the heating element 30 is now supplied with current via movable electrodes 31, 32. This takes place only in a partial region of the heating element 30 locally delimited in the longitudinal direction. This means the heating element 30 conducts current in the Y direction, i.e., perpendicularly to the longitudinal direction L or to the welding direction W, in the bonding region or in the welding zone locally delimited in the longitudinal direction L (X direction) by contact with the electrodes 31, 32, while the remaining regions of the heating element 30 are not supplied with current.

During the welding procedure, the electrodes 31, 32 are moved in the longitudinal direction L of the bond or of the heating element 30, i.e., in the welding direction W, and at the same time are in continuous electrical contact with the heating element 30 or with its respective contacted partial regions or electrically conductive elements 30a. In this manner, the locally delimited welding zone is moved in the heating element 30 in the welding direction W or in the direction of the welding movement (X direction), which corresponds to the longitudinal direction L of the planar heating element 30 or the weld seam. In this case, the heating element 30 remains fixed in place between the two skin sections 11, 12. (Step 2)

The contact pressure rollers 41, 42, which press the two skin sections 11, 12 against one another during the welding, are moved synchronously with the moved electrodes 31, 32.

After the welding together, the heating element 30 remains in the weld seam.

As the method is carried out, the respective parameters required for the welding procedure are taken into consideration. For example, the welding speed is preferably 100 to 350 mm/minute. A ceramic insulator is preferably used as the contact pressure element 41, 42, whereby the heat loss is reduced. The pressure force can be in the range of approximately 6 bar, for example. The bond has a shear strength which can be, for example, in the range of approximately 58 N/mm². The skin thicknesses of the components to be welded or fuselage segments are in the range of 2 to 3 mm in many cases. However, they can also be substantially greater and can be, for example, 6 mm or more for example in the vicinity of door cutouts of a fuselage segment.

A side view of a rear fuselage section 80 of a commercial aircraft having longitudinal seams 81 welded according to the invention is shown in **Figure 6****.**

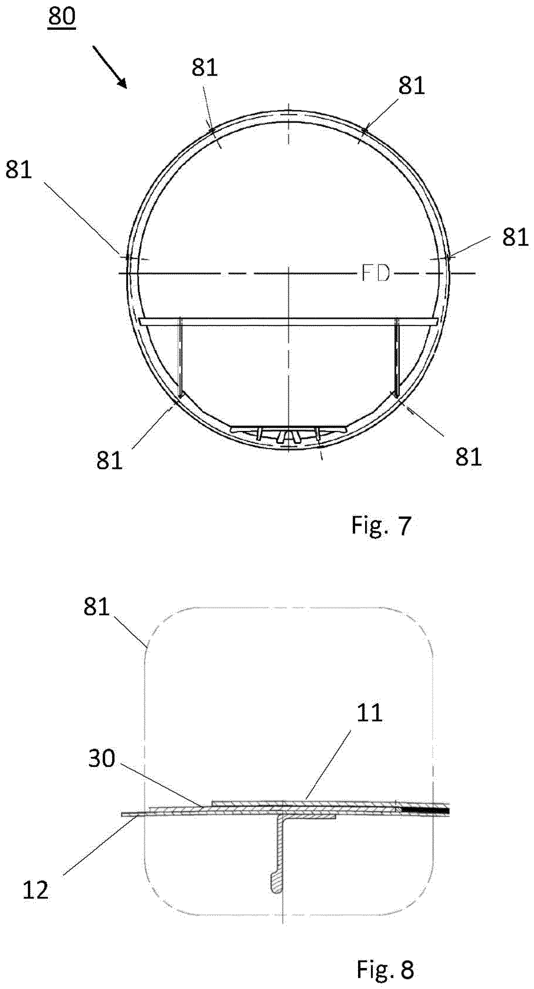

A cross section of the fuselage section 80 shown in Figure 6 having the positions of the longitudinal seams 81 welded according to the invention is shown in **Figure 7****.**

**Figure 8** shows a longitudinal seam 81 welded according to the invention of a commercial aircraft having overlapping skin sections 11, 12 as a sectional view. A first skin section 11 arranged on top of a fuselage segment overlaps a region of a second skin section 12 arranged on the bottom. The heating element 30 is located between the two skin sections.

After the welding together, the heating element 30 can remain in the seam 81. It is particularly advantageous in this case if the heating element 30 has fibres and in particular carbon fibres as electrically conductive elements 30a. The fibres are arranged for the welding so that they are aligned in the load direction in the direction of the main load of the welded bond to be produced. The heating element 30 or its fibres is thus used after the welding procedure as a reinforcing element of the welded components 11, 12.

The heating element, the device, and the method as described above represent particularly preferred embodiments of the invention. In specific applications, for example, it is also possible to design only one contact pressure element as movable or as a roller, while the other, opposing contact pressure element is stationary and forms, for example, a stationary contact pressure surface below the overlap region of the two components 11, 12.

Furthermore, in specific cases, for example, only one electrode can be designed as movable or as a roller, while the other electrode is stationary and contacts a region of the heating element 30 in a planar manner. The movable electrodes can also be formed, for example, as a slip contact.

The invention results in enhanced strength in the region of the welded bond in relation to conventional bonds by way of thermoplastic welding, in which only the thermoplastic matrix is used for bonding the components. In particular, in this way very long components, in particular fuselage segments of aircraft or commercial aircraft, can be bonded to one another by means of resistance welding

Due to the invention, continuous heating with the aid of one or more movable elements takes place during the resistance welding, instead of heating the entire length of the welded bond to be produced at once. The power consumption and the current consumption during the resistance welding are thus reduced.

Since a continuously progressing heating only takes place locally at the location of the presently heated welding zone, power losses are minimized. In particular, very long components, in particular fuselage segments, can be bonded to one another by means of resistance welding. Tolerances for long components to be welded can be handled better. The welding process can be better controlled because of the continuous resistance welding.

In addition, the time expenditure during the production of fuselages of aircraft in particular is reduced by the method according to the invention, in particular using the multifunctional heating element.

### List of reference signs:

- 11: first component / first skin section
- 12: second component / second skin section
- 30: heating element
- 30a: electrically conductive elements or fibres
- 31, 32: contact element / electrode
- 31a, 32a: axes of rotation
- 34: insulators
- 35, 36: contact regions
- 37, 38: terminal elements
- 41, 42: contact pressure element or contact pressure roller
- 41a, 42a: axes of rotation
- 50: voltage source
- 80: fuselage section
- 81: longitudinal seam
- L: longitudinal direction
- M: main load or main load direction
- W: welding direction
- X: longitudinal direction
- Y: transverse or peripheral direction

- 110, 120: components
- 130: heating element
- 131, 132: connection clamps
- 133: voltage source

## Claims

1. Welded bond of thermoplastic components, in particular for the production of aircraft, wherein the welded bond comprises a heating element (30), the heating element (30) comprising one or more electrically conductive elements (30a), which heat up upon application of an electric voltage to the heating element (30), to weld a first component (11) to a second component (12) in a region electrically heated by the heating element (30), wherein the heating element (30) remains between the welded components (11, 12) after the welding procedure,
and wherein the electrically conductive elements (30a) are designed as wires or fibres, which extend parallel to one another and electrically insulated from one another between contact regions (35, 36) for electrically contacting the heating element (30),
**characterized in that**
the parallel electrically conductive elements (30a) are oriented perpendicular to the direction X of the weld seam produced by the welding, and are used as a structural reinforcement to enhance the strength of the welded bond in the direction of the main load acting on the components (11, 12) after being welded to one another.

2. Welded bond according to Claim 1, **characterized in that** the electrically conductive elements (30a) in the heating element (30) are aligned in the direction of the main load, which acts on the components (11, 12) welded to one another.

3. Welded bond according to any Claim 1 or 2, **characterized in that** the heating element (30) comprises at least one contact surface (35, 36) for contacting an electrode (31, 32) movable in relation to the heating element (30).

4. Welded bond according to one of the preceding claims, **characterized in that** the electrically conductive elements (30a) are enclosed by thermoplastic material of the first and second components (11, 12) as a matrix.

5. System for bonding thermoplastic components by resistance welding, in particular for the production of aircraft, comprising a unit (31, 32) for displacing an electrically heated region of the components (11, 12) in a welding direction W along the components (11, 12), and
a heating element (30) configured to provide a welded bond according to any one of the preceding claims.

6. System according to Claim 5, **characterized in that** the unit (31, 32) for displacing the electrically heated region comprises one or more contact elements (31, 32), which are movable in relation to the heating element (30) to electrically contact the heating element (30) at different points in succession.

7. System according to Claim 6, **characterized in that** the contact elements (31, 32) are designed as roller electrodes, which roll on the heating element (30) during the welding procedure to continuously supply various partial regions of the heating element (30) with current in succession.

8. System according to Claim 7, **characterized in that** the electrically conductive elements (30a) of the heating element (30) extend parallel to the axis of rotation (31a, 32a) of the roller electrodes (31, 32).

9. System according to any one of the claims 5 to 8, **characterized by** one or more contact pressure elements (41, 42) to press the first component (11) and the second component (12) against one another in a contact pressure region during the welding procedure, wherein the contact pressure region is movable synchronously with the electrically heated region.

10. Method for bonding thermoplastic components by resistance welding, in particular for the production of aircraft, in which
a first component (11) is welded to a second component (12) on an electrically heated region of the components (11, 12), wherein electrically conductive elements (30a) of a heating element (30) are designed as wires or fibres, which extend parallel to one another and electrically insulated from one another between contact regions (35, 36) for electrically contacting the heating element (30), and
the heating element (30) remains between the welded components (11, 12) after the welding procedure,
**characterized in that**
the parallel electrically conductive elements (30a) are oriented perpendicular to the direction X of the weld seam to be produced, and are aligned in the direction of the main load which acts on the components (11, 12) welded to one another,
wherein the parallel electrically conductive elements (30a) are used for structural reinforcement of the component produced by welding to enhance the strength of the welded bond in the direction of the main load which acts on the components (11, 12) welded to one another.

11. Method according to Claim 10, **characterized in that** the electrically heated region of the components (11, 12) is moved during the welding procedure in a welding direction W in relation to the components (11, 12).

12. Method according to Claim 10 or 11, **characterized in that** one electrode (31, 32) is moved in the welding direction W and continuously supplies various partial regions of the heating element (30) with current, in which the electrically conductive elements (30a) extend electrically insulated from one another and extend perpendicular to the welding direction W, in succession.

13. Method according to any one of Claims 10 to 12, **characterized in that** the electrically conductive elements (30a) are enclosed by melted thermoplastic material of the first and second component as a matrix during welding,

14. Aircraft, **characterized in that** it comprises components which
14.1. are provided with a welded bond according any one of Claims 1 to 4; and/or
14.2. were welded using a system according to any one of Claims 5 to 9; and/or
14.3. are produced using a method according to any one of Claims 10 to 13.

## Patentansprüche

1. Schweißverbindung thermoplastischer Komponenten, insbesondere zur Herstellung von Luftfahrzeugen, wobei die Schweißverbindung ein Heizelement (30) umfasst, wobei das Heizelement (30) ein oder mehrere elektrisch leitfähige Elemente (30a) umfasst, die sich beim Anlegen einer elektrischen Spannung an das Heizelement (30) erwärmen, um eine erste Komponente (11) an eine zweite Komponente (12) in einem durch das Heizelement (30) elektrisch erwärmten Bereich zu schweißen, wobei das Heizelement (30) nach dem Schweißvorgang zwischen den verschweißten Komponenten (11, 12) verbleibt,
und wobei die elektrisch leitfähigen Elemente (30a) als Drähte oder Fasern entworfen sind, die sich parallel zueinander erstrecken und zwischen den Kontaktbereichen (35, 36) zum elektrischen Kontaktieren des Heizelements (30) elektrisch voneinander isoliert sind,
**dadurch gekennzeichnet, dass**
die parallelen elektrisch leitfähigen Elemente (30a) zu der Richtung X der durch das Schweißen erzeugten Schweißnaht senkrecht orientiert sind und als eine Strukturverstärkung verwendet werden, um die Festigkeit der Schweißverbindung in der Richtung der Hauptlast, die auf die Komponenten (11, 12) wirkt, nachdem sie miteinander verschweißt worden sind, zu erhöhen.

2. Schweißverbindung nach Anspruch 1, **dadurch gekennzeichnet, dass** die elektrisch leitfähigen Elemente (30a) im Heizelement (30) in der Richtung der Hauptlast ausgerichtet sind, die auf die miteinander verschweißten Komponenten (11, 12) wirkt.

3. Schweißverbindung nach einem der Ansprüche 1 oder 2, **dadurch gekennzeichnet, dass** das Heizelement (30) wenigstens eine Kontaktfläche (35, 36) zum Kontaktieren einer in Bezug auf das Heizelement (30) beweglichen Elektrode (31, 32) umfasst.

4. Schweißverbindung nach einem der vorstehenden Ansprüche, **dadurch gekennzeichnet, dass** die elektrisch leitfähigen Elemente (30a) durch ein thermoplastisches Material der ersten und der zweiten Komponente (11, 12) als eine Matrix umschlossen sind.

5. System zum Verbinden thermoplastischer Komponenten durch Widerstandsschweißen, insbesondere zur Herstellung von Luftfahrzeugen, das eine Einheit (31, 32) zum Verschieben eines elektrisch erwärmten Bereichs der Komponenten (11, 12) in einer Schweißrichtung W entlang der Komponenten (11, 12) und
ein Heizelement (30), das konfiguriert ist, eine Schweißverbindung nach einem der vorstehenden Ansprüche bereitzustellen, umfasst.

6. System nach Anspruch 5, **dadurch gekennzeichnet, dass** die Einheit (31, 32) zum Verschieben des elektrisch erwärmten Bereichs ein oder mehrere Kontaktelemente (31, 32) umfasst, die in Bezug auf das Heizelement (30) beweglich sind, um das Heizelement (30) an verschiedenen Stellen nacheinander elektrisch zu kontaktieren.

7. System nach Anspruch 6, **dadurch gekennzeichnet, dass** die Kontaktelemente (31, 32) als Walzenelektroden ausgebildet sind, die während des Schweißvorgangs auf dem Heizelement (30) rollen, um verschiedene Teilbereiche des Heizelements (30) nacheinander kontinuierlich mit Strom zu versorgen.

8. System nach Anspruch 7, **dadurch gekennzeichnet, dass** sich die elektrisch leitfähigen Elemente (30a) des Heizelements (30) parallel zur Drehachse (31a, 32a) der Walzenelektroden (31, 32) erstrecken.

9. System nach einem der Ansprüche 5 bis 8, **gekennzeichnet durch** ein oder mehrere Anpressdruckelemente (41, 42), um die erste Komponente (11) und die zweite Komponente (12) während des Schweißvorgangs in einem Anpressdruckbereich gegeneinander zu pressen, wobei der Anpressdruckbereich synchron mit dem elektrisch erwärmten Bereich beweglich ist.

10. Verfahren zum Verbinden thermoplastischer Komponenten durch Widerstandsschweißen, insbesondere zur Herstellung von Luftfahrzeugen, wobei
eine erste Komponente (11) in einem elektrisch erwärmten Bereich der Komponenten (11, 12) an eine zweite Komponente (12) geschweißt wird, wobei die elektrisch leitfähigen Elemente (30a) eines Heizelements (30) als Drähte oder Fasern entworfen sind, die sich parallel zueinander erstrecken und zwischen den Kontaktbereichen (35, 36) zum elektrischen Kontaktieren des Heizelements (30) elektrisch voneinander isoliert sind, und
das Heizelement (30) nach dem Schweißvorgang zwischen den verschweißten Komponenten (11, 12) verbleibt,
**dadurch gekennzeichnet, dass**
die parallelen elektrisch leitfähigen Elemente (30a) zu der Richtung X der herzustellenden Schweißnaht senkrecht ausgerichtet sind und in der Richtung der Hauptlast, die auf die miteinander verschweißten Komponenten (11, 12) wirkt, ausgerichtet sind,
wobei die parallelen elektrisch leitfähigen Elemente (30a) zur strukturellen Verstärkung der durch das Schweißen hergestellten Komponente verwendet werden, um die Festigkeit der Schweißverbindung in der Richtung der Hauptlast zu erhöhen, die auf die miteinander verschweißten Komponenten (11, 12) wirkt.

11. Verfahren nach Anspruch 10, **dadurch gekennzeichnet, dass** der elektrisch erwärmte Bereich der Komponenten (11, 12) während des Schweißvorgangs in einer Schweißrichtung W in Bezug auf die Komponenten (11, 12) bewegt wird.

12. Verfahren nach Anspruch 10 oder 11, **dadurch gekennzeichnet, dass** eine Elektrode (31, 32) in der Schweißrichtung W bewegt wird und verschiedene Teilbereiche des Heizelements (30) nacheinander kontinuierlich mit Strom versorgt, in denen sich die elektrisch leitfähigen Elemente (30a) voneinander elektrisch isoliert erstrecken und sich senkrecht zur Schweißrichtung W erstrecken.

13. Verfahren nach einem der Ansprüche 10 bis 12, **dadurch gekennzeichnet, dass** die elektrisch leitfähigen Elemente (30a) während des Schweißens durch ein geschmolzenes thermoplastisches Material der ersten und der zweiten Komponente als eine Matrix umschlossen werden.

14. Luftfahrzeug, **dadurch gekennzeichnet, dass** es Komponenten umfasst, die
14.1. mit einer Schweißverbindung nach einem der Ansprüche 1 bis 4 bereitgestellt sind; und/oder
14.2. unter Verwendung eines Systems nach einem der Ansprüche 5 bis 9 verschweißt wurden; und/oder
14.3. unter Verwendung eines Verfahrens nach einem der Ansprüche 10 bis 13 hergestellt werden.

## Revendications

1. Liaison soudée de composants thermoplastiques, en particulier pour la production d'aéronefs, la liaison soudée comprenant un élément chauffant (30), l'élément chauffant (30) comprenant un ou plusieurs éléments électriquement conducteurs (30a), lesquels s'échauffent lors de l'application d'une tension électrique à l'élément chauffant (30), afin de souder un premier composant (11) à un deuxième composant (12) dans une région chauffée électriquement par l'élément chauffant (30), l'élément chauffant (30) restant entre les composants (11, 12) soudés après la procédure de soudage, et les éléments électriquement conducteurs (30a) étant conçus sous forme de fils ou de fibres, lesquels s'étendent parallèlement les uns aux autres et sont électriquement isolés les uns des autres entre des régions de contact (35, 36) destinées à établir un contact électrique avec l'élément chauffant (30), **caractérisée en ce que**
les éléments électriquement conducteurs (30a) parallèles sont orientés perpendiculairement à la direction X du cordon de soudure produit par le soudage, et sont utilisés comme renfort structurel afin d'améliorer la résistance de la liaison soudée dans la direction de la charge principale agissant sur les composants (11, 12) après leur soudage l'un à l'autre.

2. Liaison soudée selon la revendication 1, **caractérisée en ce que** les éléments électriquement conducteurs (30a) dans l'élément chauffant (30) sont alignés dans la direction de la charge principale qui agit sur les composants (11, 12) soudés l'un à l'autre.

3. Liaison soudée selon la revendication 1 ou 2, **caractérisée en ce que** l'élément chauffant (30) comprend au moins une surface de contact (35, 36) destinée à établir un contact avec une électrode (31, 32) mobile par rapport à l'élément chauffant (30).

4. Liaison soudée selon l'une des revendications précédentes, **caractérisée en ce que** les éléments électriquement conducteurs (30a) sont entourés par le matériau thermoplastique des premier et deuxième composants (11, 12) formant une matrice.

5. Système de liaison de composants thermoplastiques par soudage par résistance, en particulier pour la production d'aéronefs, comprenant une unité (31, 32) destinée à déplacer une région chauffée électriquement des composants (11, 12) dans une direction de soudage W le long des composants (11, 12), et
un élément chauffant (30) configuré pour fournir une liaison soudée selon l'une quelconque des revendications précédentes.

6. Système selon la revendication 5, **caractérisé en ce que** l'unité (31, 32) destinée à déplacer la région chauffée électriquement comprend un ou plusieurs éléments de contact (31, 32), mobiles par rapport à l'élément chauffant (30) afin d'établir un contact électrique avec l'élément chauffant (30) en différents points successivement.

7. Système selon la revendication 6, **caractérisé en ce que** les éléments de contact (31, 32) sont conçus sous forme d'électrodes-rouleaux, lesquelles roulent sur l'élément chauffant (30) pendant la procédure de soudage afin d'alimenter en courant de manière continue diverses régions partielles de l'élément chauffant (30) successivement.

8. Système selon la revendication 7, **caractérisé en ce que** les éléments électriquement conducteurs (30a) de l'élément chauffant (30) s'étendent parallèlement à l'axe de rotation (31a, 32a) des électrodes-rouleaux (31, 32).

9. Système selon l'une quelconque des revendications 5 à 8, **caractérisé par** un ou plusieurs éléments de pression de contact (41, 42) pour presser le premier composant (11) et le deuxième composant (12) l'un contre l'autre dans une région de pression de contact pendant la procédure de soudage, la région de pression de contact étant mobile de manière synchrone avec la région chauffée électriquement.

10. Procédé de liaison de composants thermoplastiques par soudage par résistance, en particulier pour la production d'aéronefs, dans lequel
un premier composant (11) est soudé à un deuxième composant (12) sur une région chauffée électriquement des composants (11, 12), des éléments électriquement conducteurs (30a) d'un élément chauffant (30) étant conçus sous forme de fils ou de fibres, lesquels s'étendent parallèlement les uns aux autres et sont électriquement isolés les uns des autres entre des régions de contact (35, 36) destinées à établir un contact électrique avec l'élément chauffant (30), et l'élément chauffant (30) reste entre les composants (11, 12) soudés après la procédure de soudage,
**caractérisé en ce que**
les éléments électriquement conducteurs (30a) parallèles sont orientés perpendiculairement à la direction X du cordon de soudure à produire, et sont alignés dans la direction de la charge principale agissant sur les composants (11, 12) soudés l'un à l'autre,
dans lequel les éléments électriquement conducteurs (30a) parallèles sont utilisés comme renfort structurel du composant produit par soudage afin d'améliorer la résistance de la liaison soudée dans la direction de la charge principale qui agit sur les composants (11, 12) soudés l'un à l'autre.

11. Procédé selon la revendication 10, **caractérisé en ce que** la région chauffée électriquement des composants (11, 12) est déplacée pendant la procédure de soudage dans une direction de soudage W par rapport aux composants (11, 12).

12. Procédé selon la revendication 10 ou 11, **caractérisé en ce qu'**une électrode (31, 32) est déplacée dans la direction de soudage W et alimente en courant de manière continue diverses régions partielles de l'élément chauffant (30), dans lesquelles les éléments électriquement conducteurs (30a) s'étendent électriquement isolés les uns des autres et s'étendent perpendiculairement à la direction de soudage W, successivement.

13. Procédé selon l'une quelconque des revendications 10 à 12, **caractérisé en ce que** les éléments électriquement conducteurs (30a) sont entourés par le matériau thermoplastique fondu des premier et deuxième composants formant une matrice pendant le soudage.

14. Aéronef, **caractérisé en ce qu'**il comprend des composants qui
14.1. sont pourvus d'une liaison soudée selon l'une quelconque des revendications 1 à 4 ; et/ou
14.2. ont été soudés au moyen d'un système selon l'une quelconque des revendications 5 à 9 ; et/ou
14.3. sont produits au moyen d'un procédé selon l'une quelconque des revendications 10 à 13.
